# FASCICULE DE BREVET EUROPEEN

(11) **EP 1 055 531 B1**
(45) Date de publication et mention de la délivrance du brevet: **13.07.2005**
(21) Numéro de dépôt: 00401438.7
(22) Date de dépôt: 24.05.2000
(51) Int. Cl.: B60C 23/04

(54) **Système sécurisé de contrôle de la pression d'un pneumatique**
Gesichertes Reifendrucküberwachungssystem
Secure system for tire pressure monitoring

(30) Priorité: 28.05.1999 FR 9906752
(43) Date de publication de la demande: 29.11.2000
(73) Titulaire: JOHNSON CONTROLS AUTOMOTIVE ELECTRONICS, 95526 Cergy Pontoise Cédex (FR)
(72) Inventeur: Delaporte, Francis, 95520 Osny (FR)
(74) Mandataire: Bloch, Gérard

(56) Documents cités:
- US-A- 3 835 451
- US-A- 4 734 674
- US-A- 5 837 891

## Description

Un système de contrôle de la pression d'un pneumatique de roue de véhicule sert à signaler une mauvaise pression au calculateur de bord du véhicule, pour qu'il alerte en temps utile le conducteur.

Un tel système, fixé à la valve à l'intérieur du pneumatique, est donc inaccessible et la pile qui l'alimente doit donc être sollicitée avec modération. A cet effet, les émissions radio de valeur de pression sont discontinues, avec par exemple un cycle de six minutes, lorsque le véhicule roule, et d'une heure à l'arrêt. Il convient donc d'assurer la bonne réception du résultat de chaque mesure, pour ne pas involontairement allonger le cycle des informations.

La demande US 3 835 451 décrit un système de contrôle de la pression dont l'émetteur a une fréquence fonction de la vitesse du véhicule.

A cette fin, chaque mesure est émise avec redondance sous la forme d'un train de plusieurs rafales de bits d'informations sur la pression. Par exemple, de façon classique, trois rafales de 50 ms sont émises avec un espacement d'environ 100 ms. Chaque roue émet ainsi ses données, de façon aléatoire par rapport aux autres, et d'éventuelles collisions d'émissions de deux roues n'affectent en général pas la totalité des rafales d'un train. La redondance, c'est-à-dire le nombre de répétitions d'émission de chaque mesure, est donc déterminée en fonction du risque aléatoire de telles collisions radio.

La demanderesse a cependant constaté que, au-delà d'une certaine vitesse du véhicule, la réception correcte des rafales n'était plus assurée, c'est-à-dire que plusieurs bits de chaque rafale étaient erronés, ce qui entraînait la perte totale de chaque rafale. La redondance perdait toute efficacité. On peut même ici parler de fading dans la transmission des données.

La demanderesse a alors observé, et surtout à grandes vitesses, que, à chaque tour de roue, le système de contrôle de pression perdait temporairement le contact radio avec le calculateur de bord sur un secteur angulaire déterminé, lié à la présence de masses métalliques du châssis et de la roue, formant écran. Il ne s'agissait donc pas d'événements aléatoires, ce qui expliquait l'inefficacité de la redondance.

C'est ainsi que la demanderesse propose la solution suivante au problème de transmission des télémesures depuis un pneumatique de roue.

L'invention concerne donc un système sécurisé de contrôle de la pression d'un pneumatique d'une roue de véhicule comprenant
- un capteur de pression,
- un émetteur de trains de rafales identiques de données de pression,
- un processeur de commande de l'émission des rafales de données agencé pour que, au moins à des vitesses de rotation de la roue supérieures à un seuil, au moins une rafale d'un train soit émise en totalité lors d'un tour de roue.

Ainsi, pour chaque rafale, la probabilité est bonne que sa transmission intervienne en dehors d'une période dans laquelle la liaison émetteur-récepteur est coupée et la redondance, liée à l'émission de plusieurs rafales, augmente la probabilité globale pour que l'une au moins des rafales soit transmise correctement au calculateur de bord d'exploitation de celles-ci.

Comme l'invention porte sur la transmission de données, on conçoit que le système peut transmettre des données autres que celles sur la pression, comme par exemple la température, l'identification de la roue.

Avantageusement, l'émetteur est du type à modulation de fréquence.

Le calculateur d'exploitation reçoit ainsi un signal dans lequel l'information, liée à la fréquence, est indépendante du niveau de signal reçu. Cela évite toute nécessité d'un contrôle de gain du signal démodulé qui, en modulation d'amplitude, est difficile à mettre au point du fait que le niveau radio reçu varie constamment et avec une grande dynamique, à cause de la présence des masses métalliques, et qu'il est donc impossible de déterminer un niveau moyen de référence.

L'invention sera mieux comprise à l'aide de la description suivante d'une forme de réalisation préférée du système de contrôle de l'invention, en référence au dessin annexé, sur lequel :

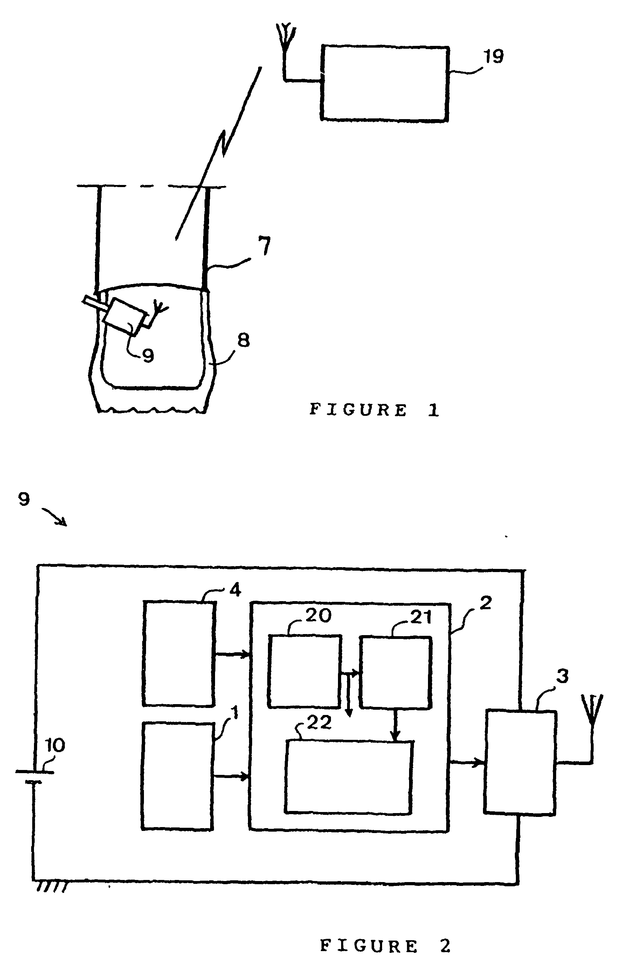

- la figure 1 est une représentation schématique du système de contrôle de l'invention, logé dans un pneumatique d'une roue d'un véhicule automobile dont le calculateur de bord exploite les mesures,
- la figure 2 est un schéma électrique par blocs fonctionnels du système de télémesure de la figure 1,
- la figure 3 représente les variations, sur un tour de roue, du niveau de signal radio reçu par le calculateur, et
- la figure 4 représente, en regard de la figure 3, les instants d'émission des rafales d'un train de signaux de télémesure de pression.

Le système sécurisé représenté, référencé 9, de contrôle par télémesure de pression de pneumatique de véhicule est logé dans un pneumatique 8 d'une roue 7 d'un véhicule, ici une automobile, et fixé à sa valve. Il comporte un capteur de pression 1 relié en sortie à un processeur 2, ici microprocesseur, qui commande un émetteur sans fil 3, ici radio. Les émissions de celui-ci sont reçues par un calculateur de bord 19 du véhicule qui les exploite pour éventuellement fournir une alarme. Une pile 10 alimente l'ensemble des circuits ci-dessus du système 9.

Le microprocesseur 2 comporte un circuit de base de temps 20 qui en rythme le fonctionnement et en particulier commande un circuit 21 de mise en veille et de réveil des autres circuits du microprocesseur 2, tels qu'un bloc de calcul (ALU) 22.

Le fonctionnement du système est le suivant.

La base de temps 20 commande le circuit 21 par des signaux d'horloge que ce dernier compte pour réveiller cycliquement, ici toutes les deux secondes, les circuits du microprocesseur 2 pour éventuellement émettre, sous la commande du bloc de calcul 22, un train de N rafales de télémesure de pression, ici N = 3, puis remettre en veille ces circuits (22). Une telle émission intervient avec un cycle de six minutes si la roue tourne, ce qu'indique au microprocesseur 2 un capteur inertiel 4, tel qu'une ampoule Reed. Sinon, au repos, le cycle est de 1 heure.

Le microprocesseur 2 de commande de l'émission des rafales de données transmet les données correspondantes à l'émetteur 3 à une vitesse supérieure à un seuil bas de transmission, tel que, à au moins des vitesses de rotation de la roue 7 supérieures à un seuil, au moins une rafale d'un train soit émise en totalité lors d'un tour de la roue 7.

Plus précisément ici, l'émission de chaque rafale a une durée égale à une fraction déterminée de la durée d'un tour de roue lorsque le véhicule se déplace à une vitesse maximale déterminée. Si l'on prend par exemple une vitesse de seuil de 300 km/h, un tour de roue correspond à 24 millisecondes. Dans cet exemple, la durée d'une rafale représente le tiers de cette valeur, soit 8 ms.

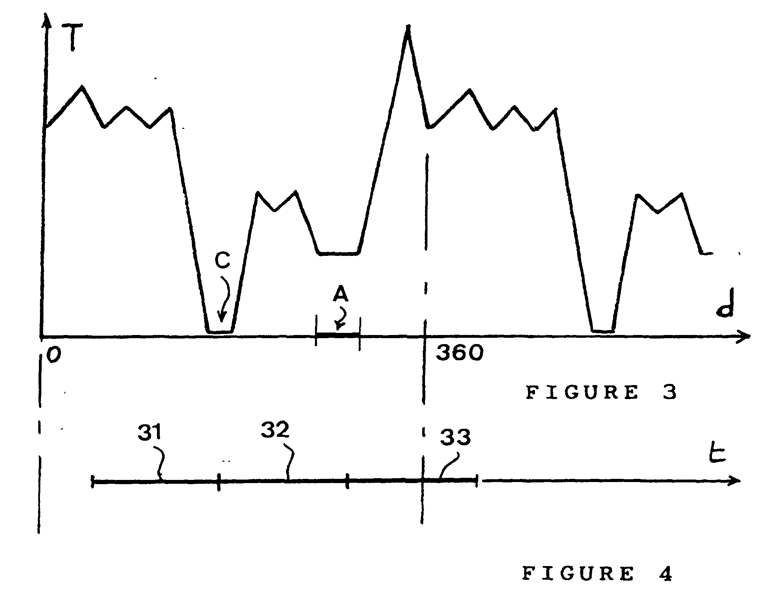

La figure 3 représente, sur un tour de la roue 7, le niveau reçu par le calculateur de bord 19, donc représente aussi le coefficient T de transmission radio. On remarque que la courbe de transmission T présente une plage C d'environ 10 degrés à transmission sensiblement nulle, du fait de la présence de masses métalliques du véhicule, et une plage A dans laquelle la liaison peut rester établie mais avec une atténuation élevée. D'une façon générale, même en dehors des plages A, C, le niveau reçu fluctue dans de larges limites.

La figure 4 représente, en fonction du temps t, et en regard de la position angulaire de la roue 7 déterminée par la figure 3, les périodes successives 31, 32, 33 d'émission des rafales d'un train, d'une durée de 8 ms chacune. A la vitesse de seuil, la probabilité est nulle pour que l'émission des trois rafales 31, 32, 33 intervienne dans le secteur angulaire ou position d'angle mort de rotation C de la roue 7, dans lequel la liaison radio avec le calculateur de bord 19 est coupée. Plus précisément, comme chaque période 31, 32, 33 d'émission d'une rafale s'étend sur une durée correspondant à une rotation de 120 degrés, elle a presque deux chances sur trois (360 - 120 - 10/360) d'être située en dehors de l'angle mort C de 10 degrés.

Si, en outre, on émet en succession ininterrompue les N = trois rafales, donc sur un tour de roue à cette vitesse, au plus deux de celles-ci (périodes 31, 32) risquent d'être affectées par l'angle mort C, dans leurs zones d'extrémité voisines, et la troisième rafale (période 33) est avec certitude bien reçue.

Pour augmenter encore la probabilité pour que le calculateur de bord 19 puisse exploiter les données reçues, le bloc de calcul 22 calcule et ajoute dans cet exemple, aux bits de données de mesure de pression et à des bits identifiant la roue 7, des bits de redondance, de données de code autocorrecteur, pour tolérer la perte en réception d'un nombre déterminé de bits.

Pour s'affranchir des fluctuations de transmission T, la transmission des données s'effectue dans cet exemple par modulation de fréquence, et non d'amplitude, c'est-à-dire par sauts d'une porteuse entre une fréquence f0, représentant un 0 logique, et une fréquence f1, représentant un 1 logique.

Au niveau du calculateur de bord 19, un démodulateur FM à gain d'entrée élevé fournit une tension variant avec la valeur de la fréquence reçue, cette tension ayant donc deux valeurs possibles, de 0 et 1 logique. On s'affranchit ainsi des variations d'amplitude du signal reçu de la roue 7, à chaque tour de celle-ci.

Dans cet exemple, lorsque le système 9 émet de façon espacée les rafales d'un train, il poursuit cependant son émission entre les rafales, en émettant l'une des porteuses, ici f0, ou éventuellement un motif prédéterminé de bits par modulation f0/f1. Ainsi, le microprocesseur 2 commande l'émetteur 3 pour émettre une porteuse, modulée ou non, sur toute la durée de chaque train.

Le calculateur de bord 19 peut ainsi, par détection de l'état "0" correspondant, déterminer la position angulaire de la roue 7, une disparition en réception de la porteuse f0 indiquant la position angulaire de la plage C. La plage C sert ainsi d'impulsion négative de synchronisation du calculateur de bord 19 sur la roue 7. La vitesse de la roue 7 peut être ainsi déterminée par des détections successives. Le calculateur de bord 19 détermine, dans les périodes 31, 32, 33 des rafales reçues, la présence éventuelle et la position de la plage C, et/ou de la plage A par une mesure de niveau, afin d'affecter aux bits correspondants un niveau de confiance faible et les corriger d'après ceux reçus en dehors de ces plages A, C.

## Revendications

1. Système sécurisé de contrôle de la pression d'un pneumatique (8) d'une roue de véhicule comprenant
- un capteur de pression (1),
- un émetteur (3) de trains de rafales identiques de données de pression,
- un processeur (2) de commande de l'émission des rafales de données agencé pour que, au moins à des vitesses de rotation de la roue supérieures à un seuil, au moins une rafale d'un train soit émise en totalité lors d'un tour de roue.

2. Système selon la revendication 1, dans lequel l'émetteur (3) est du type à modulation de fréquence.

3. Système selon la revendication 2, dans lequel le processeur (2) et l'émetteur (3) sont agencés pour émettre une porteuse sur toute la durée de chaque train.

4. Système selon l'une des revendications 1 à 3, dans lequel le processeur (2) est agencé pour ajouter des données de redondance aux données de mesure de pression.

## Patentansprüche

1. Gesichertes Prüfsystem des Drucks eines Reifens (8) eines Kraftfahrzeugs umfassend
- einen Drucksensor (1),
- einen Sender (3) identischer Bündelreihen von Druckdaten,
- einen Prozessor (2) zum Steuern des Sendens der Datenbündelreihen, dazu eingerichtet, dass mindestens bei Drehzahlen des Fahrzeugs über einem Schwellenwert bei einer Radumdrehung mindestens eine Bündelreihe insgesamt gesendet wird.

2. System nach Anspruch 1, bei dem der Sender (3) des Typs mit Frequenzmodulation ist.

3. System nach Anspruch 2, bei dem der Prozessor (2) und der Sender (3) eingerichtet sind, um eine Trägerwelle während der ganzen Dauer jeder Bündelreihe zu senden.

4. System nach einem der Ansprüche 1 bis 3, bei dem der Prozessor (2) eingerichtet ist, um Redundanzdaten zu den Druckmessdaten hinzuzufügen.

## Claims

1. Secure system for monitoring the pressure of a tyre (8) of a vehicle wheel comprising
- a pressure sensor (1),
- an emitter (3) of trains of identical bursts of pressure data,
- a processor (2) for controlling the emission of the data bursts, configured so that, at least at speeds of rotation of the wheel that are greater than a threshold, at least one burst of a train is emitted in full during a wheel revolution.

2. System according to Claim 1, in which the emitter (3) is of the frequency modulation type.

3. System according to Claim 2, in which the processor (2) and the emitter (3) are configured so as to emit a carrier over the entire duration of each train.

4. System according to one of Claims 1 to 3, in which the processor (2) is configured so as to supplement the pressure measurement data with redundancy data.
